Europäisches Patentamt

**European Patent Office**

Office européen des brevets

(11) Publication number: **0 127 242**
**B1**

(12) # EUROPEAN PATENT SPECIFICATION

(45) Date of publication of patent specification: **22.04.87**

(21) Application number: **84200755.1**

(22) Date of filing: **24.05.84**

(51) Int. Cl.⁴: **G 03 B 27/58,** G 03 B 27/62, B 65 H 5/06

(54) **Conveyor device.**

(30) Priority: **31.05.83 NL 8301915**

(43) Date of publication of application:
**05.12.84 Bulletin 84/49**

(45) Publication of the grant of the patent:
**22.04.87 Bulletin 87/17**

(84) Designated Contracting States:
**DE FR GB NL**

(56) References cited:
**EP-A-0 017 234**
**US-A-2 199 270**

(73) Proprietor: **Océ-Nederland B.V.**
**St. Urbanusweg 43**
**NL-5914 CC Venlo (NL)**

(72) Inventor: **Holtman, Lodewijk Tarcisius**
**Ruys de Beerenbrouckstraat 69**
**NL-5931 HB Tegelen (NL)**

Courier Press, Leamington Spa, England.

## Description

This invention relates to a conveyor device for material in sheet or web form, comprising two pairs of conveyor rollers disposed with their axes parallel to one another, each pair comprising two cooperating conveyor rollers, one of which is deformable and the other substantially non-deformable, and pressing means for pressing the co-operating conveyor rollers against one another.

Conveyor devices of this kind are generally known and usable for many applications. In specific cases, e.g. for conveying originals or a light-sensitive element along the exposure station of a copying machine, the known conveyor devices do not operate satisfactorily, because the formed image undergoes deformation to a certain degree due to the occurrence of small differences in speed between the pairs of conveyor rollers before and after the exposure station.

US Patent 3 245 311 discloses a conveyor device in which the pairs of conveyor rollers before and after an exposure station are interconnected by rubber belts disposed over two conveyor rollers, one of which rollers forming part of the one pair and the other roller forming part of the other pair of rollers. Although in this case the same superficial speed is expected in the nips between the pairs of rollers, differences do occur in respect of the speed of conveyance of a sheet. Also, the common drive of pairs of rollers by means of a belt produces a varying speed difference as a result of belt stretch.

It has been found that these speed differences occur particularly in cases in which deformable rollers are used in the pairs. The deformability of these rollers is caused by the use of relatively soft coverings of materials such as plastics and rubber, in order to increase the frictional properties of the rollers. The speed of conveyance of a material in sheet or web form between a pair of rollers is dependent upon the degree to which one or both rollers is/are deformed in the nip between the rollers. The degree of deformation is in turn dependent upon the hardness of the surface of the rollers used, the diameter of the rollers, and the pressure exerted on the rollers. Even if a number of identical pairs of rollers is used, there will be a difference in the speed of conveyance between the pairs of rollers, because the several rollers differ, within the normal tolerances, in respect of the properties of the deformable material used, the diameter, and the spring constant of the resilient element used to press the rollers against one another. Also, the deformable rollers wear differently during use, so that the difference in speed of conveyance ultimately varies.

According to the invention, these difficulties are obviated in that a conveyor device of the kind referred to in the preamble is provided with a substantially non-deformable drive roller which, to drive the two pairs of conveyor rollers, is in contact with the deformable conveyor roller of each pair and in that the pressing means press each deformable conveyor roller against the associated conveyor roller and against the drive roller in a direction situated in or substantially in the plane of the bisector of the dihedral angle between the plane through the axes of the drive roller and deformable conveyor roller and the plane through the axes of the deformable conveyor roller and the associated non-deformable conveyor roller.

The expression "substantially non-deformable roller" denotes a roller which undergoes substantially no deformation under operating conditions. The expression "a roller of a pair" denotes not only a single roller but also a number of rollers disposed with their axes in extension of one another.

In the conveyor device according to the invention, the speed of conveyance of the several pairs of rollers is independent of the pressure applied and the hardness of the surface of the rollers used and practically independent of the roller diameters. The speed of conveyance is dependent upon the direction in which the pressure is applied but this direction can generally be adjusted sufficiently exactly. This direction has proved not to be particularly critical and can without difficulty deviate a few degrees from the plane of the bisector.

The foregoing will be explained in detail with reference to the following Figures:

Fig. 1 is a diagrammatic cross-section through the rollers of an embodiment of a conveyor device according to the invention.

Fig. 2 is a more detailed view of another embodiment of a conveyor device according to the invention.

Fig. 3 is a section along the line I—I' of the embodiment according to Fig. 2.

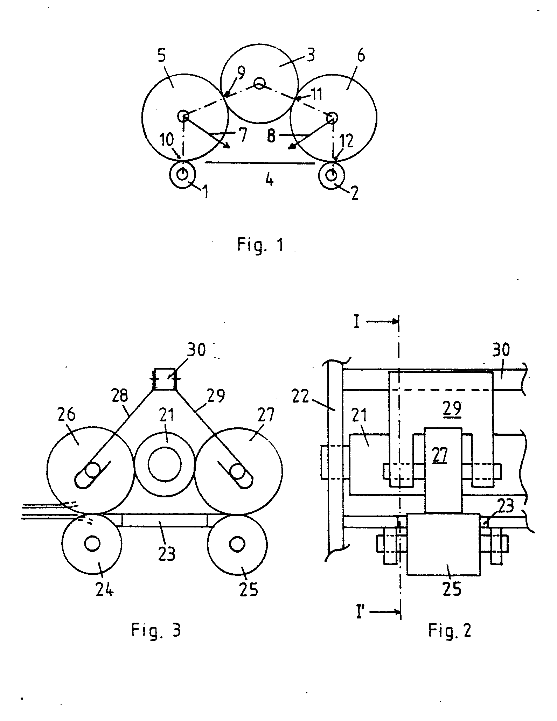

In the embodiment according to Fig. 1, a thick steel drive roller 3 is disposed above a platen 4 of a copying machine (not shown). Thinner steel conveyor rollers 1 and 2 respectively are disposed one on either side of the platen. A conveyor roller 5 having a rubber covering is pressed against rollers 1 and 3 and a rubber-covered conveyor roller 6 is pressed against rollers 2 and 3. The direction of the pressing force on conveyor roller 5 is indicated by arrow 7 and the direction of the pressing force on conveyor roller 6 is indicated by arrow 8. The direction of arrow 7 coincides with the bisector of the angle between the lines connecting the axes of the rollers 3 and 5 and of the rollers 1 and 5. The direction of arrow 8 coincides with the bisector of the angle between the lines connecting the axes of the rollers 3 and 6 and of the rollers 2 and 6. (Of course the bisectors and connecting lines represent planes perpendicularly intersecting the drawing plane).

The effect of the direction of the pressing force indicated by arrow 7 is that the pressure in the nip 9 between the drive roller 3 and the conveyor roller 5 is equal to the pressure in the nip 10 between the conveyor rollers 5 and 1. As a result of the deformation of the conveyor roller 5 in the nip 9 this conveyor roller has a somewhat lower circumferential speed than the drive roller 3, but since the conveyor roller 5 is again deformed in nip 10 the circumferential speed of conveyor roller 1 is again somewhat greater than that of conveyor roller 5. If rollers 1 and 3 were to have the same diameter, the deformation in the nips 9 and 10 would be completely the same and there would be complete compensation of the deceleration so that the circumferential speed of the conveyor roller 1 would be completely identical to that of the drive roller 3. In the same way, given identical diameters for roller 3 and 2, the direction of the pressing force applied to the conveyor roller 6 as indicated by arrow 8 will result in the circumferential speed of conveyor roller 2 being equal to that of drive roller 3 and hence also equal to that of conveyor roller 1. In that case the degree to which the layer of rubber of the conveyor rollers 5 and 6 is deformed is completely immaterial as are also the deformation-influencing parameters, such as the magnitude of the forces acting on the rollers.

Since, in the embodiment illustrated, the conveyor rollers 1 and 2 have a smaller diameter than the drive roller 3, the speed compensation is not complete and a possible difference in deformation will continue to play a part, but the influence of such difference on the circumferential speed of the conveyor rollers 1 and 2 is much less than in the pairs of rollers of the prior-art conveyor devices.

In the conveyor device according to Figs. 2 and 3, the degree to which the rubber-covered conveyor rollers undergo deformation is quite immaterial.

This device comprises a metal drive roller 21 mounted between two frame plates 22. Only one of these frame plates is illustrated in Fig. 2. A glass strip 23 is mounted beneath the metal drive roller 21, again between the two frame plates, and its long side extends parallel to the axis of the metal drive roller 21.

This glass strip forms an exposure slot of a copying machine (not further shown). A row of steel conveyor rollers 24 and 25 respectively is provided one on either side of the long sides of the glass strip with the axes parallel to the long sides of the glass strip and, within each row, with the axes in extension of one another. Fig. 2 shows only one roller 25 of these rows of conveyor rollers, the diameter of which is equal to that of drive roller 21. Rubber-covered deformable conveyor rollers 26 and 27 respectively are pressed one each into each space between the drive roller 21 and the conveyor rollers 24 and 25 respectively by means of a leafspring in each case, 28 and 29 respectively, which leafsprings are directed nearly parallel to the plane through the axes of the rollers 21 and 24 and the plane through the axes of the rollers 21 and 25 respectively.

One end of each leafspring is secured to a connecting rod 30 mounted between the frame plates 22. The other end of each leafspring 28 and 29 respectively terminates in two lips which on both sides of each rubber-covered conveyor roller 26 and 27 respectively are bent around the axle of the roller and press the rubber-covered conveyor rollers 26 and 27 respectively against the drive roller 21 and against the associated steel conveyor rollers 24 and 25 respectively in a direction perpendicular to the plane of the leafspring at the pressure point against the axle of the associated rubber-covered roller.

The axes of the rubber-covered rollers 26 and 27 are parallel in two rows to the long sides of the glass strip and are situated approximately in extension of one another within a row. Fig. 2 shows only one roller 27 of one of the rows.

## Claims

1. A conveyor device for material in sheet or web form, comprising two pairs of conveyor rollers diposed with their axes parallel to one another, each pair comprising two co-operating conveyor rollers, one of which is deformable and the other substantially non-deformable, and pressing means for pressing the co-operating conveyor rollers against one another, characterised in that the conveyor device is provided with a substantially non-deformable drive roller (3, 21) which, to drive the two pairs of conveyor rollers (1, 5 and 2, 6; 24, 26 and 25, 27), is in contact with the deformable conveyor roller (5, 6 and 26, 27) of each pair and in that the pressing means (28, 29) press each deformable conveyor roller against the associated conveyor roller and against the drive roller in a direction situated in or substantially in the plane of the bisector of the dihedral angle between the plane through the axes of the drive roller and deformable conveyor roller and the plane through the axes of the deformable conveyor roller and the associated non-deformable conveyor roller.

2. A conveyor device according to claim 1, characterised in that the diameter of each non-deformable conveyor roller is substantially equal to the diameter of the drive roller.

## Patentansprüche

1. Transportvorrichtung für blatt- oder bahnförmiges Material, mit zwei Paaren von Transportrollen, deren Achsen parallel zueinander ausgerichtet sind, wobei jedes Paar zwei zusammenwirkende Transportrollen aufweist, von denen eine verformbar und die andere im wesentlichen unverformbar ist, und mit Andruckmitteln zum Aneinanderdrücken der zusammenwirkenden Transportrollen, dadurch gekennzeichnet, daß die Transportvorrichtung eine im wesentlichen unverformbare Antriebsrolle (3, 21) aufweist, die zum Antrieb der beiden Paar von Transportrollen (1, 5 und 2, 6; 24, 26 und 25, 27) mit ver verformbaren Transportrolle ( 5, 6 und 26, 27) jedes Paares in Berührung steht, und dass die Andruckmittel (28, 29) jede der verformbaren Transportrollen gegen die zugeordnet Transportrolle und gegen die Antriebsrolle in einer Richtung andrücken, die genau oder zumindest im wesentlichen in der Ebene der Winkelhalbierenden zwischen der Ebene durch die Achsen der Antriebsrolle und der verformbaren Transportrolle und der Ebene die Acheson der verformbahren Transportrolle und der zugehörigen unverformbaren Transportrolle liegt.

2. Transportvorrichtung nach Anspruch 1, dadurch gekennzeichnet, dass der Durchmesser jeder der unverformbaren Transportrollen im wesentlichen gleich dem Durchmesser der Antriebsrolle ist.

**Revendications**

1. Dispositif de transport pour matériau en feuille ou en bande, comprenant deux paires de rouleaux tranporteurs disposés avec leurs axes parallèles entre eux, chaque paire comprenant deux rouleaux transporteurs coopérant entre eux, dont l'un est déformable et l'autre pratiquement indéformable, et des moyens de pression servant à presser les rouleaux transporteurs coopérant entre eux l'un contre l'autre, caractérisé en ce que le dispositif transporteur comprend un rouleau d'entraînement (3, 21) pratiquement indéformable qui, pour entraîner les deux paires de rouleaux transporteurs (1, 5 et 2, 6; 24, 26 et 25, 27) est en contact avec le rouleau transporteur déformable (5, 6 et 26, 27) de chaque paire et en ce que les moyens de pression (28, 29) pressent chaque rouleau transporteur déformable contre le rouleau transporteur qui lui est associé et contre le rouleau d'entraînement, dans une direction située dans ou à près dans le plan bissecteur de l'angle dièdre formé entre le plan qui passe par les axes de rouleau d'entraînement et du rouleau transporteur déformable et le plan qui passe par les axes du rouleau transporteur déformable et du rouleau transporteur indéformable qui lui est associé.

2. Dispositif de transport selon la revendication 1, caractérisé en ce que le diamètre de chaque rouleau transporteur indéformable est à peu près égal au diamètre du rouleau d'entraînement.

Fig. 1

Fig. 3

Fig. 2